# EUROPEAN PATENT SPECIFICATION

(11) **EP 3 034 356 B1**
(45) Date of publication and mention of the grant of the patent: **21.03.2018**
(21) Application number: 14198617.4
(22) Date of filing: 17.12.2014
(51) Int. Cl.: B60P 3/40

(54) **Load support structure for a loading vehicle**
Lasttragende Struktur für Ladefahrzeug
Structure de support de charge pour un véhicule de chargement

(43) Date of publication of application: 22.06.2016
(73) Proprietor: Brenderup AB, 553 13 Jönköping (SE)
(72) Inventor: Satkowski, Jacek, 63-100 SREM (PL); Jaworski, Tomasz, 59-920 BOGATYNIA (PL)
(74) Representative: Awapatent AB

(56) References cited:
- WO-A1-02/087920
- DE-A1- 1 405 956
- US-A- 2 332 991
- US-A- 3 856 168
- US-A- 5 800 145
- US-B1- 6 988 756

## Description

### Technical Field

The present disclosure relates to a loading structure for a loading vehicle such as a pickup or trailer.

### Background

Loading vehicles are often used to transport bulky or long goods. In some cases the long goods exceeds the length of the loading area of the loading vehicle, such as the trailer, and therefore the goods usually must be placed at an angle, with one end resting on the floor and one end resting on the top side of a side wall, commonly on a rear panel of the trailer. In order to securely fasten long loads the load is usually strapped against the rear panel. A problem with this solution is that it is not possible to open the rear panel as the goods are strapped against it. A solution to this problem may be to install a load support, see for example US2002/0009347 A1, which may comprise a horizontal support bar that may be fixed onto the loading vehicle, which the load may be secured against, and thereby the rear panel may be opened if needed. Prior art in the field may be found in for example WO02/087920 in which an example of a truck bed divider is disclosed, US698756 in which a modular tailgate is enclosed and US5800145 in which a cargo restraining device is enclosed.

However, when securing the load against a support bar, the tight strapping may cause the load to be damaged or dented. Therefore, there is a need for a more enhanced product to provide secure loading onto a trailer and decreasing the risk of damaging the goods.

### Summary

It is an object of the present invention to provide an improved solution that alleviates the mentioned drawbacks with present devices. Furthermore, it is an object to provide a load support structure for a loading vehicle comprising at least one load bearing member having a flat load support surface extending along a length of the load bearing member. Further, the load support structure comprises at least one mounting element for coupling the load bearing member to the loading vehicle in substantially horizontal orientation. The load bearing member is configured to be rotationally coupled relative the loading vehicle by means of the mounting element, so that the load bearing member is rotationally adjustable around its longitudinal axis.

By definition, a loading vehicle as described may be a transport trailer, a pickup, a lorry, or any similar vehicle suitable for carrying a load.

By allowing the load bearing member to be rotationally coupled to the vehicle via a mounting element, the rotational movement may easily be adjusted to adapt to the required angle to support a load when arranged against the flat load support surface. This rotational adjustment is an advantage since long loads, such as long pipes or planks, are typically arranged on the loading vehicle such as a trailer with one end resting against the trailer floor, and one end towards the load bearing member at an angle relative the floor. By having a load bearing member that is angularly adjustable, a flat surface portion of the load bearing member, which is the load support surface of the load bearing member may always be in contact with the load. By allowing a larger portion of the load to be in contact with the surface, the contact area is distributed over a larger surface and may therefore prevent high stress concentrations in the point of contact between the load and the load bearing member, which subsequently may prevent damages, dents or even breakage to the load, as well as it provides improved stability.

By coupling the load bearing member to the trailer with mounting elements, the mounting elements may be configured to provide a rotationally adjustable mechanism, which allows the load bearing member to rotate relative to the trailer. The rotation may be achieved in various ways. For instance, the mounting element may provide rotation relative to the vehicle by being fixedly arranged to the vehicle and rotatable relative to the load bearing member, alternatively the mounting element may be fixedly arranged to the load bearing member and rotatable relative to the vehicle. Another alternative may be that the mounting element may be rotational relative to both vehicle and the load bearing bar. The mounting element may be any type of solution that may provide a rotational adjustment, such as a bushing, a ball bearing arrangement, a hinge, a rivet or the like.

According to one embodiment of the invention, the rotation occurs freely with indefinite angular variation.

This may be an advantage since a stepless adjustment may provide a more precise angular setting of the load bearing member for the current load which reduces the risk of damage to the load by ensuring that the whole flat loading surface abuts the load.

According to yet another embodiment of the invention, the rotational adjustment may involve stepped adjustments such as a solution that clicks into a certain angle in angular steps. Further, any type of solution that may provide a rotation in order to adjust the angle of the load bearing member may be possible. It may also be possible to lock the load bearing member at the desired angle which may be an advantage if the trailer carries the same rigid load from time to time.

According to another embodiment of the invention, the load support structure is configured such that when a load is arranged against the flat load support surface, the load bearing member may assume an angle substantially the same as the angle in which the load is arranged against the load bearing member relative the loading vehicle.

By doing this, there may be no need for manual adjustment. The load bearing member may automatically swing into a suitable position. Further, less rigid load, such as thinner plastic pipes or thinner wooden planks, may bounce during transportation and hence the load bearing member may adjust its according to the current load angle. The load bearing member may alternatively be arranged to rotate with means of a crank, rope, cog wheel or the like for a controlled rotation.

In one embodiment the load bearing member may have a cross section substantially rectangular in shape. However, the load bearing member may not be shaped as a closed rectangle, but may for instance be made from bent sheet steel with one or more sides open. However, the load bearing member may have a substantially flat load bearing surface.

According to yet another embodiment, the load bearing member may be detachably arranged to the loading vehicle.

By allowing detachable arrangement, the load support structure may be used only when needed. A load bearing member may, when arranged onto the trailer, be arranged across a rear wall of the trailer which generally may be openable. Since it may be desirable to be able to open the rear wall on a trailer, it may be an advantage that the load bearing member can be detachable and/or movable so that the load bearing member may not obstruct the opening. The load bearing member may be attachable to the trailer any way suitable for the specific installation. It may be by hooks, straps, clips, clamps or the like. It may also be by detachable screws, pins, rivets or the like.

According to yet another embodiment, the load bearing member may be configured to be coupled to a corner post adapter. The corner post adapter may be configured to be arranged to the loading vehicle.

The corner post adapter may be used in order to provide a detachable arrangement which easily can be removed from the vehicle. The corner post adapter may be a vertical member configured to be inserted in a hollow corner post. There may be a second corner post adapter arranged on the opposite corner post, and the load bearing member arranged between the two corner post adapters. The corner post adapter may be configured such that the load bearing member may be arranged on an upper part of the corner post adapter so that when inserted into the corner post, the load bearing member may be arranged above the corner post and along a rear panel to the opposite corner post, wherein the second corner post adapter may be arranged. The load support structure may be provided with a corner post adapter in each corner.

According to yet another embodiment the load bearing member further may comprise load securing means.

By providing the load bearing member with load securing means, it may facilitate strapping of a load against the load bearing member. The load bearing member may be provided with one or more load securing means, and the load securing means may be evenly distributed along at least a part of the length of the load bearing member.

According to yet another embodiment the load securing means may be at least one of the following: apertures, loops, hooks or the like.

By providing the load bearing member with load securing means of this type, it may facilitate secure strapping of the load. By having apertures, loops, hooks or the like distributed along the load bearing member, the strapping arrangements may be easily adapted for the size of the current load.

According to yet another embodiment the load support structure further may comprise load retaining elements, configured to be detachably arranged on the load bearing member for preventing horizontal movement of the load.

Thereby, the load may be retained on the load support structure. E.g. the retaining elements may prevent that the load can slide relative the load bearing member. The load retaining elements may be rigid supports. By being rigid, the load retaining members may be strong enough to retain bulky long load. The load retaining elements may be of such size that when they are coupled to the load bearing member, they may extend away from the load bearing member such that it may comfortably retain a sizable load, such as ventilation tube, ladders or the like. The support structure may be equipped with one, two or several load retaining members. The load retaining members may be used to divide the load into sections depending on the load size or shape in order to prevent different load to damage one another. For instance in one section there may be a stack of 50 mm tube, in another section there may be a ladder and so forth. The load retaining elements may be provided with load securing means in order to secure the load so as to reduce the risk for the load to bounce over the edge of the load retaining element.

According to yet another embodiment, the load support structure may further comprise a first longitudinal rail to be arranged on a longitudinal side wall of the loading vehicle.

By arranging a first longitudinal rail onto the loading vehicle, it may be possible to easily arrange load along the longitudinal sides. For instance, a bulk load such as a tall box may be placed onto the trailer floor. In order to fixate the box on the trailer, in order to prevent the box from sliding, the box may be strapped against the first longitudinal rail. The first longitudinal rail may be provided with load securing means to facilitate securing the load.

According to yet another embodiment, the first longitudinal rail may be arranged to a corner post adapter.

By allowing the first longitudinal rail to be coupled to the corner post adapter, the first longitudinal rail may be detachable along with the corner post adapter. The first longitudinal rail may be rotationally adjustable. The first longitudinal rail may alternatively be static. According to yet another embodiment, the load support structure may further comprise a second longitudinal rail configured to be arranged on the second longitudinal side wall located on the opposite side of the loading vehicle.

By providing the load support structure with a second longitudinal rail, it may be possible to secure a large amount of load onto the trailer. Also, it may be possible to make attachments to both side panels at once, for instance when there is a need for multiple attachment points.

According to yet another embodiment the load support structure may further comprise at least one divider element, configured to be detachably arranged to the first and second longitudinal rail.

By having a divider element, it may be possible to divide the loading volume of the loading vehicle into smaller sections. This may be an advantage since smaller sections may prevent loose load to slip. Also, it may be possible to sort load into the different sections. The divider element may be a thin piece of rail, substantially the same material as the other rails in the load support structure. There may also be a number of divider elements arranged on different locations. The divider element may alternatively be a larger piece of material, such that each divider element reaches from the trailer floor to a top edge of the trailer side walls. Another alternative may be that a number of thinner divider elements may be stacked in top of each other in order to provide a suitable height. The divider element may comprise load securing means.

According to yet another embodiment, the load support structure may further comprise at least a first and a second divider adapter, wherein the first divider adapter may be configured to be arranged on said first longitudinal rail and the second divider adapter may be configured to be arranged on the second longitudinal rail. The divider element may be configured to be arranged to the first and second divider adapter.

By providing a divider adapter, it may be possible to easily arrange a number of divider elements to the loading vehicle without the need for fixating divider elements directly to the vehicle. Due to this, there is no need to use permanent joining methods or to use fasteners or drill permanent holes. The divider adapters may be configured such that they may hang onto the first and second longitudinal rail. Alternatively, they may be configured to be coupled to the load securing means. This may be done by fasteners, clips, clamps straps or the like.

In another aspect of the inventive concept, the objectives mentioned above are achieved by a loading vehicle comprising a load support structure, according to any of the preceding embodiments. Thereby, the advantages described above may be achieved on a loading vehicle.

In another aspect of the inventive concept, the objectives mentioned above are achieved by use of a load support structure for receiving a load on a loading vehicle, wherein the support structure comprises at least one load bearing member having a flat load support surface extending along a length of the load bearing member. Moreover, the support structure comprises at least one mounting element coupling said load bearing member to said loading vehicle in a substantially horizontal orientation, and wherein the load bearing member is rotationally coupled relative said loading vehicle by means of said mounting element, so that said load bearing member is rotationally adjustable around its longitudinal axis, and wherein said flat load support surface is used to support said load during transportation, so as to distribute pressure from the load resting on said flat load support surface over the whole flat load support surface. Thereby, the advantages described above may be achieved by using a load support structure for receiving a load on a loading vehicle.

Further features of, and advantages with, the present invention will become apparent when studying the appended claims and the following description. The skilled addressee realize that different features of the present invention may be combined to create embodiments other than those described in the following, without departing from the scope of the present invention.

### Brief description of the Drawings

The invention will in the following be described in more detail with reference to the enclosed drawings, wherein:
Fig. 1 shows a perspective view of a support structure according to an embodiment of the invention.
Fig. 2 shows a detailed view of a support structure according to an embodiment of the invention.
Fig. 3 shows a detailed view of a support structure according to an embodiment of the invention.
Fig. 4 shows a perspective view of a support structure according to an embodiment of the invention.
Fig. 5 shows a perspective view of a support structure according to an embodiment of the invention.
Fig. 6 shows a perspective view of a support structure according to an embodiment of the invention.
Fig. 7 shows an exploded view of a support structure according to an embodiment of the invention.
Fig. 8 shows a perspective view of a support structure according to an embodiment of the invention.
Fig. 9 shows a perspective view of a support structure according to an embodiment of the invention.

### Description of Embodiments

The present invention will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. In the drawings, like numbers refer to like elements.

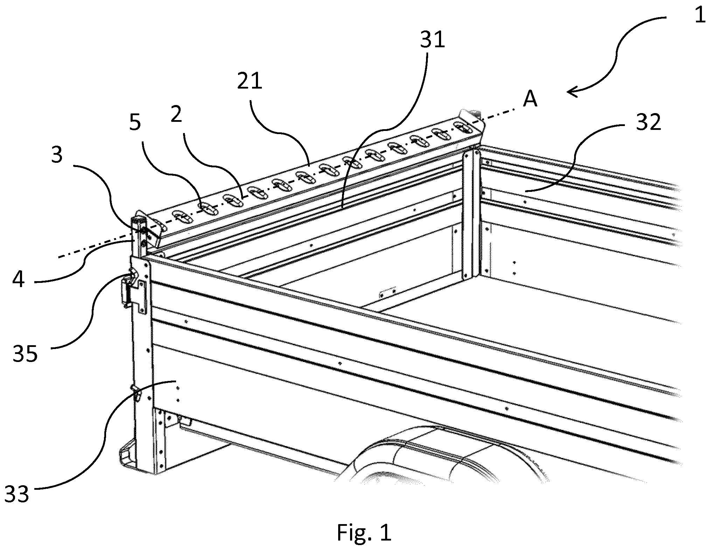

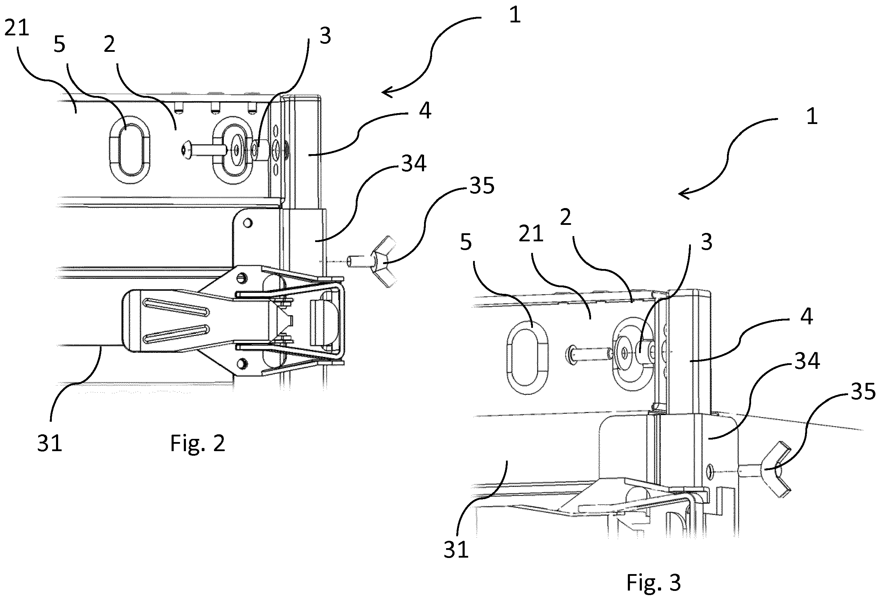

Fig. 1 shows a perspective view of a load support structure 1. The load support structure 1, which may be arranged onto loading vehicle such as a trailer, a pickup truck or the like, comprises a load bearing member 2 which is rotationally coupled to a corner post adapter 4 on each end. The load bearing member has a longitudinal axis A and is rotationally coupled via a mounting element 3 such that it is rotatable around the longitudinal axis A. The mounting element 3 may be configured to provide the rotational adjustment such as a rivet and/or bushing or the like, which may be placed between the corner post adapter 4 and the load bearing member 2. As illustrated, the load bearing member 2 comprises load securing means 5 which facilitate the load to be securely fixated by using straps, ropes, wire or the like to prevent the load from sliding and hence risk to be damaged. The corner post adapter in fig. 1 is a vertical bar, adapted to fit into the square hollow of the trailer. The corner post adapters 4 are configured to be inserted with a suitable depth into a corner post 34 (see fig. 2 and 3), so that there is no risk for the corner post adapter 4 to dismount spontaneously. Alternatively, the load bearing member 2 may be coupled to a mounting element 3 which is directly coupled to a loading vehicle 30, without the need of a corner post adapter 4. In fig. 1, the mounting element 3 comprises a pin, rivet, a bolt or the like that may allow the load bearing member 2 to rotate freely in order to adjust the position with regard to the angle of the load.

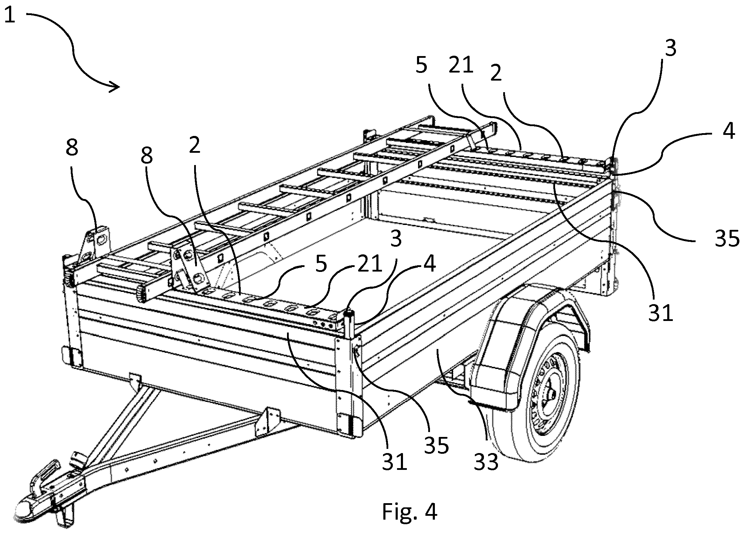

Further in fig. 2 it is shown a corner post adapter 4 inserted in a hollow corner post 34 of the trailer. The corner post adapter is fixated with a fastener, which in fig.4 is represented by a wing nut, for securing the corner post adapter in its place. By choosing a wing nut, it may be possible to easily detach the support structure from the trailer by hand, without any special tools, when it is not in use by lifting the corner post adapter 4 out of the corner post 34. An alternative to a wing nut may be a click-arrangement, or a twist-arrangement, a regular bult head or the like. It is also alternatively possible to have a permanent mounting of the corner post adapter and the load bearing member 2 being detachable from the corner post adapter 4.

Fig. 3 shows a detailed view of the load support structure comprising the mounting element, from a slightly different angle than fig. 2. In fig. 3 it is shown that the rotational adjustment of the load bearing member 2 in one embodiment is enabled by a bushing and a rivet for free rotational adjustment. The load bearing member 2 is equipped with a hole on a distal end which is facing a corner post adapter in which the bushing is inserted. The vertical corner post adapter comprises a corresponding hole and the same level and a rivet is inserted through both holes for suspension of the load bearing member and the rivet and the bushing in combination provides a soft rotational movement.

Fig. 4 shows a load support structure 1 arranged on a trailer 30. The load support structure 1 in fig. 4 comprises two load bearing members 2 being arranged along the front and rear end of the trailer 30, respectively. That is on the front panel 36 and the rear panel 31, respectively. It is shown how a long load may be arranged along the entire length of the trailer 30, being securely strapped on each load bearing member in the securing loops on each load bearing member. It is shown that the load bearing member 2 has assumed an angle such that the load is resting on top of the load support surface 21 so that a big enough surface is in contact with the load to distribute the load over a larger area in order to prevent high stress concentrations locally on the load. At the load bearing member 2 located on the front panel 36, a pair of load securing means 8 are arranged in order to fixate the load horizontally.

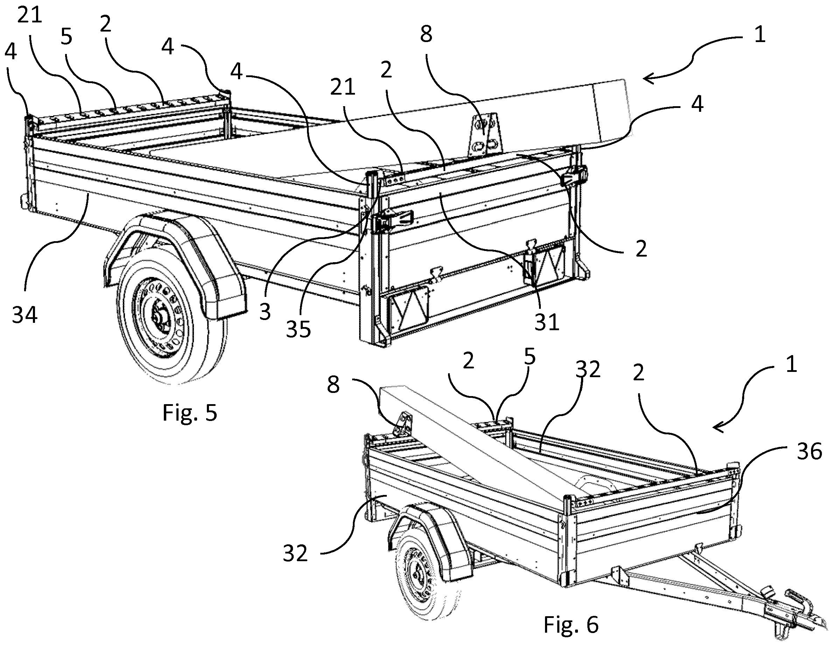

In fig. 5 it is shown a long load being angularly arranged against the load support structure 1 with one end resting against the trailer floor, and one end resting against the horizontal load support surface 21. The load support structure further comprises a pair of load retaining elements 8, each arranged on either side of the load in order to prevent the load from sliding horizontally along the load bearing member 2. The location of the load retaining element 8 is adjustable in order to suit the width of the current load. The load retaining element in fig. 5 have a vertical side, which is arranged inwards towards the load, and an angled side arranged oppositely to the vertical side. The angle is such that the load retaining element 8 has a wider base arranged against the load support surface 21. The load retaining element 8 may typically be arranged in the securing means (not shown). The attachment may be provided by inserting a protrusion of the load retaining element 8 in one or more of the load securing means 5. The attachment may also be provided by having a special attachment pin configured to fit the load securing means 5 on one end and the load retaining element 8 on the other end.

Fig. 6 shows the load support structure 2 as shown in fig. 5 from a different angle.

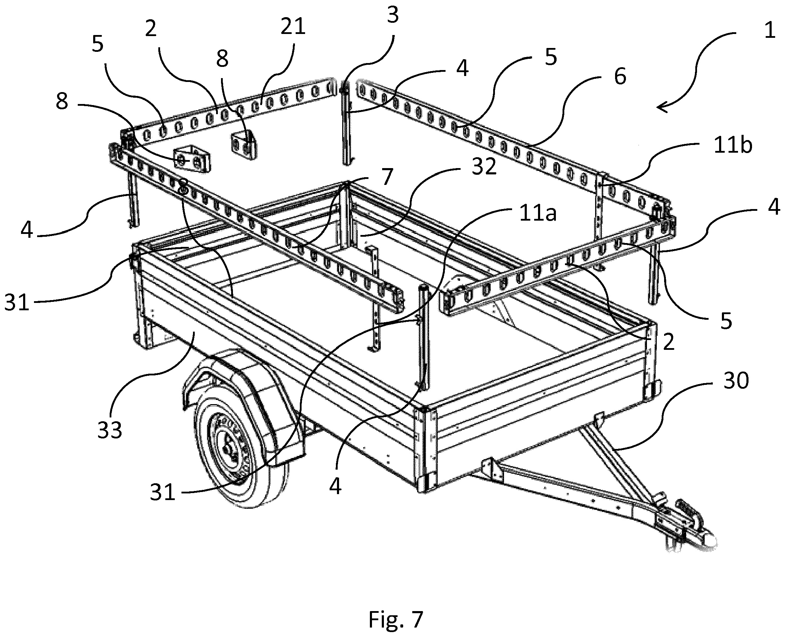

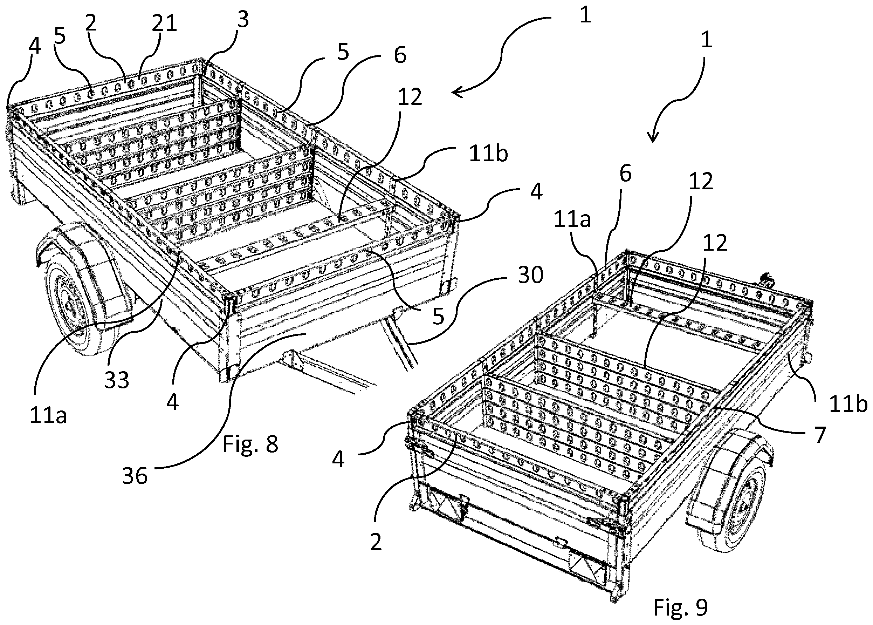

In fig. 7, there is an exploded view of a load support structure 1 comprising two load bearing members 2, each arranged on a respective front 36 and rear panel 31 of the trailer 30. There are further a first 6 and a second longitudinal rail 7, each arranged on a first 32 and second side 33 of the trailer. The first and second longitudinal rails 6, 7 comprise load securing means 5 for securing load in the trailer volume. Further there is one corner post adapter 4 arranged in each corner post 34 of the trailer 30 which provides attachment for the first and second longitudinal rails 6, 7 and the load bearing members 2. Further it is shown a pair of divider adapters 11, each arranged on one respective first and second longitudinal rail 6, 7. The divider adapters 11 in fig. 7 are arranged to be suspended from a top portion of the first and second longitudinal rail 6, 7 and are arranged to provide means to attach one or more divider element 10 in the trailer load volume for dividing the space into several smaller compartments, as seen in fig. 8 and fig. 9.

The first and second longitudinal rails 6, 7 in fig. 7 may be fixedly arranged to the corner posts adapter 4. Alternatively the longitudinal rails may comprise a similar rotationally adjustable mounting element as provided to the load bearing member 2. By arranging the rails to corner post adapters 4, the whole load support structure 1 may be detachable.

While the present invention has been described with reference to a number of preferred embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiments disclosed as the best mode contemplated for carrying out this invention, but that the invention will include all embodiments falling within the scope of the appended claims. Moreover, the use of the terms first, second, etc. do not denote any order or importance, but rather the terms first, second, etc. are used to distinguish one element from another.

In the drawings and specification, there have been disclosed preferred embodiments and examples of the invention and, although specific terms are employed, they are used in a generic and descriptive sense only and not for the purpose of limitation, the scope of the invention being set forth in the following claims.

## Claims

1. A load support structure (1) for a loading vehicle (30) comprising
- at least one load bearing member (2) having a flat load support surface (21) extending along a length of the load bearing member (2),
- at least one mounting element (3) for coupling said load bearing member (2), to said loading vehicle in substantially horizontal orientation,
**characterized in that**
said load bearing member (2) is configured to be rotationally coupled relative said loading vehicle (30) by means of said mounting element (3), so that said load bearing member (2) is rotationally adjustable around its longitudinal axis (A),
wherein the load support structure is configured such that when a load is arranged against said flat load support surface (21), said load bearing member (2) assumes an angle substantially the same as the angle in which the load is arranged against the load bearing member relative the loading vehicle.

2. Load support structure (1) according to claim 1, wherein the rotation occurs freely with indefinite angular variation.

3. Load support structure (1) according to any of claims 1-2, wherein the load bearing member (2) is detachably arranged to the loading vehicle.

4. Load support structure according to any of claims 1-3, wherein the load bearing member (2) is configured to be coupled to a corner post adapter (4), wherein the corner post adapter (4) is configured to be arranged to the loading vehicle.

5. Load support structure (1) according to any of the preceding claims, wherein the load support surface (21) further comprises load securing means (5).

6. Load support structure (1) according to claim 5, wherein the load securing means is at least one of the following: apertures, loops or hooks.

7. Load support structure (1) according to any of the preceding claims further comprising load retaining elements (8), configured to be detachably arranged on said load bearing member (8) for preventing horizontal movement of the load.

8. Load support structure (1) according to any of the preceding claims, further comprising a first longitudinal rail (6) to be arranged on a longitudinal side wall (9) of the loading vehicle.

9. Load support structure (1) according to claim 8, wherein the first longitudinal rail (6) is arranged to a corner post adapter (4).

10. Load support structure (1) according to claim 7 or 8, further comprising a second longitudinal rail (7) configured to be arranged on a second longitudinal side wall (9) located on the opposite side of the loading vehicle.

11. Load support structure (1) according to claim 10 further comprising at least one divider element (10), configured to be detachably arranged to said first and second longitudinal rail (6, 7).

12. Load support structure (1) according to claim 9, further comprising at least a first and a second divider adapter (11a, 11b), wherein the first divider adapter (11a) is configured to be arranged on said first longitudinal rail (6) and the second divider adapter (11b) is configured to be arranged on the second longitudinal rail (7), wherein said divider element (9) is configured to be arranged to said first and second divider adapter (11a, 11b).

13. Loading vehicle (30) comprising a load support structure (1), according to any of the preceding claims.

14. Use of a load support structure (1) for receiving a load on a loading vehicle (30), said support structure comprising
- at least one load bearing member (2) having a flat load support surface (21) extending along a length of the load bearing member (2),
- at least one mounting element (3) coupling said load bearing member (2) to said loading vehicle in a substantially horizontal orientation,
**characterized in that**
said load bearing member (2) is rotationally coupled relative said loading vehicle (30) by means of said mounting element (3), so that said load bearing member (2) is rotationally adjustable around its longitudinal axis (A) such that when a load is arranged against said flat load support surface (21), said load bearing member (2) assumes an angle substantially the same as the angle in which the load is arranged against the load bearing member relative the loading vehicle, and
said flat load support surface is used to support said load during transportation, so as to distribute pressure from the load resting on said flat load support surface (21) over the whole flat load support surface (21).

## Patentansprüche

1. Laststützende Struktur (1) für ein Lastfahrzeug (30), Folgendes umfassend:
- mindestens ein lasttragendes Element (2) mit einer ebenen laststützenden Oberfläche (21), die sich über eine Länge des lasttragenden Elements (2) erstreckt,
- mindestens ein Montageelement (3) zum Koppeln des lasttragenden Elements (2) mit dem Lastfahrzeug in im Wesentlichen horizontaler Ausrichtung,
**dadurch gekennzeichnet, dass**
das lasttragende Element (2) dafür gestaltet ist, mittels des Montageelements (3) im Verhältnis zum Lastfahrzeug (30) derart drehbar gekoppelt zu werden, dass das lasttragende Element (2) drehbar um seine Längsachse (A) justierbar ist,
wobei die laststützende Struktur derart gestaltet ist, dass das lasttragende Element (2), wenn eine Last anliegend an der ebenen laststützenden Oberfläche (21) angeordnet wird, einen Winkel einnimmt, der im Wesentlichen gleich dem Winkel ist, in dem die Last im Verhältnis zum Lastfahrzeug an dem lasttragenden Element angeordnet wird.

2. Laststützende Struktur (1) nach Anspruch 1, wobei die Drehung frei mit unbegrenzter Winkelveränderung erfolgt.

3. Laststützende Struktur (1) nach einem der Ansprüche 1 bis 2, wobei das lasttragende Element (2) lösbar am Lastfahrzeug angeordnet wird.

4. Laststützende Struktur nach einem der Ansprüche 1 bis 3, wobei das lasttragende Element (2) dafür gestaltet ist, mit einem Eckpfostenadapter (4) gekoppelt zu werden, wobei der Eckpfostenadapter (4) dafür gestaltet ist, an dem Lastfahrzeug angeordnet zu werden.

5. Laststützende Struktur (1) nach einem der vorhergehenden Ansprüche, wobei die laststützende Oberfläche (21) ferner Lastsicherungsmittel (5) umfasst.

6. Laststützende Struktur (1) nach Anspruch 5, wobei die Lastsicherungsmittel mindestens eines der Folgenden sind: Öffnungen, Schlaufen oder Haken.

7. Laststützende Struktur (1) nach einem der vorhergehenden Ansprüche, ferner Lasthalteelemente (8) umfassend, die dafür gestaltet sind, lösbar an dem lasttragenden Element (8) angeordnet zu werden, um eine horizontale Bewegung der Last zu verhindern.

8. Laststützende Struktur (1) nach einem der vorhergehenden Ansprüche, ferner eine erste längsgerichtete Schiene (6) umfassend, die an einer Längsseitenwand (9) des Lastfahrzeugs anzuordnen ist.

9. Laststützende Struktur (1) nach Anspruch 8, wobei die erste längsgerichtete Schiene (6) an einem Eckpfostenadapter (4) angeordnet wird.

10. Laststützende Struktur (1) nach Anspruch 7 oder 8, ferner eine zweite längsgerichtete Schiene (7) umfassend, die dafür gestaltet ist, an einer zweiten Längsseitenwand (9) angeordnet zu werden, die sich an der gegenüberliegenden Seite des Lastfahrzeugs befindet.

11. Laststützende Struktur (1) nach Anspruch 10, ferner mindestens ein Trennwandelement (10) umfassend, das dafür gestaltet ist, lösbar an der ersten und der zweiten längsgerichteten Schiene (6, 7) angeordnet zu werden.

12. Laststützende Struktur (1) nach Anspruch 9, ferner mindestens einen ersten und einen zweiten Trennwandadapter (11a, 11b) umfassend, wobei der erste Trennwandadapter (11a) dafür gestaltet ist, an der ersten längsgerichteten Schiene (6) angeordnet zu werden, und der zweite Trennwandadapter (11b) dafür gestaltet ist, an der zweiten längsgerichteten Schiene (7) angeordnet zu werden, wobei das Trennwandelement (9) dafür gestaltet ist, am ersten und zweiten Trennwandadapter (11a, 11b) angeordnet zu werden.

13. Lastfahrzeug (30), umfassend eine laststützende Struktur (1) nach einem der vorhergehenden Ansprüche.

14. Verwendung einer laststützenden Struktur (1) zur Aufnahme einer Last auf einem Lastfahrzeug (30), wobei die laststützende Struktur Folgendes umfasst:
- mindestens ein lasttragendes Element (2) mit einer ebenen laststützenden Oberfläche (21), die sich über eine Länge des lasttragenden Elements (2) erstreckt,
- mindestens ein Montageelement (3) zum Koppeln des lasttragenden Elements (2) mit dem Lastfahrzeug in im Wesentlichen horizontaler Ausrichtung,
**dadurch gekennzeichnet, dass**
das lasttragende Element (2) mittels des Montageelements (3) im Verhältnis zum Lastfahrzeug (30) derart drehbar gekoppelt wird, dass das lasttragende Element (2) drehbar um seine Längsachse (A) justierbar ist, so dass das lasttragende Element (2), wenn eine Last anliegend an der ebenen laststützenden Oberfläche (21) angeordnet wird, einen Winkel einnimmt, der im Wesentlichen gleich dem Winkel ist, in dem die Last im Verhältnis zum Lastfahrzeug an dem lasttragenden Element anliegend angeordnet wird, und wobei die ebene laststützende Oberfläche verwendet wird, um die Last während des Transports derart zu stützen, dass Druck von der Last, die auf der ebenen laststützenden Oberfläche (21) ruht, über die gesamte ebene laststützende Oberfläche (21) verteilt wird.

## Revendications

1. Structure de support de charge (1) pour un véhicule de chargement (30) comprenant
- au moins un membre porteur de charge (2) ayant une surface de support de charge plane (21) s'étendant le long d'une longueur du membre porteur de charge (2),
- au moins un élément de montage (3) pour coupler ledit membre porteur de charge (2), audit véhicule de chargement dans une orientation essentiellement horizontale,
**caractérisé en ce que**
ledit membre porteur de charge (2) est configuré pour être couplé en rotation par rapport audit véhicule de chargement (30) au moyen dudit élément de montage (3), de façon ce que ledit membre porteur de charge (2) soit ajustable en rotation autour de son axe longitudinal (A),
dans laquelle la structure de support de charge est configurée de telle façon que lorsqu'une charge est agencée contre ladite surface de support de charge plane (21), ledit membre porteur de charge (2) adopte un angle qui est essentiellement le même que l'angle dans lequel la charge est agencée contre le membre porteur de charge par rapport au véhicule de chargement.

2. Structure de support de charge (1) selon la revendication 1, dans laquelle la rotation se produit de façon libre avec une variation angulaire indéfinie.

3. Structure de support de charge (1) selon l'une quelconque des revendications 1 - 2, dans laquelle le membre porteur de charge (2) est agencé de façon amovible sur le véhicule de chargement.

4. Structure de support de charge (1) selon l'une quelconque des revendications 1 - 3, dans laquelle le membre porteur de charge (2) est configuré pour être couplé à un adaptateur de pilier d'angle (4), dans laquelle l'adaptateur de pilier d'angle (4) est configuré pour être agencé sur le véhicule de chargement.

5. Structure de support de charge (1) selon l'une quelconque des revendications précédentes, dans laquelle la surface de support de charge plane (21) comprend en outre un moyen de sécurisation de charge (5).

6. Structure de support de charge (1) selon la revendication 5, dans laquelle le moyen de sécurisation de charge est au moins l'un des suivantes : ouvertures, boucles ou crochets.

7. Structure de support de charge (1) selon l'une quelconque des revendications précédentes, comprenant en outre des éléments de retenue de charge (8), configurés pour être agencés de façon amovible sur ledit élément porteur de charge (8) pour empêcher le mouvement horizontal de la charge.

8. Structure de support de charge (1) selon l'une quelconque des revendications précédentes, comprenant en outre un premier rail longitudinal (6) destiné à être agencé sur une paroi latérale longitudinale (9) du véhicule de chargement.

9. Structure de support de charge (1) selon la revendication 8, dans laquelle le premier rail longitudinal (6) est agencé sur un adaptateur de pilier d'angle (4).

10. Structure de support de charge (1) selon la revendication 7 ou 8, comprenant en outre un second rail longitudinal (7) configuré pour être agencé sur une seconde paroi latérale longitudinale (9) située sur le côté opposé du véhicule de chargement.

11. Structure de support de charge (1) selon la revendication 10, comprenant en outre au moins un élément diviseur (10), configuré pour être agencé de façon séparable sur lesdits premier et second rails longitudinaux (6, 7).

12. Structure de support de charge (1) selon la revendication 9, comprenant en outre au moins des premier et second adaptateurs diviseurs (11a, 11b), dans lequel le premier adaptateur diviseur (11a) est configuré pour être agencé sur ledit premier rails longitudinal (6) et le second adaptateur diviseur (11b) est configuré pour être agencé sur le second rail longitudinal (7), dans lequel ledit élément diviseur (9) est configuré pour être agencé sur lesdits premier et second adaptateurs diviseurs (11a, 11b).

13. Véhicule de chargement (30) comprenant une structure de support de charge (1) selon l'une quelconque des revendications précédentes.

14. Utilisation d'une structure de support de charge (1) pour recevoir une charge sur un véhicule de chargement (30), ladite structure de support comprenant
- au moins un membre porteur de charge (2) ayant une surface de support de charge plane (21) s'étendant le long d'une longueur du membre porteur de charge (2),
- au moins un élément de montage (3) pour coupler ledit membre porteur de charge (2) audit véhicule de chargement dans une orientation essentiellement horizontale,
**caractérisé en ce que**
ledit membre porteur de charge (2) est couplé en rotation par rapport audit véhicule de chargement (30) au moyen dudit élément de montage (3), de façon ce que ledit membre porteur de charge (2) soit ajustable en rotation autour de son axe longitudinal (A) de telle façon que lorsqu'une charge est agencée contre ladite surface de support de charge plane (21), ledit membre porteur de charge (2) adopte un angle qui est essentiellement le même que l'angle dans lequel la charge est agencée contre le membre porteur de charge par rapport au véhicule de chargement, et
ladite surface de support de charge plane est utilisée pour supporter ladite charge durant le transport, de façon à répartir la pression de la charge reposant sur ladite surface de support de charge plane (21) sur toute la surface de support de charge plane (21).
